# EUROPEAN PATENT APPLICATION

(11) **EP 2 735 472 A1**
(43) Date of publication of application: **28.05.2014**
(21) Application number: 13193915.9
(22) Date of filing: 21.11.2013
(51) Int. Cl.: B60N 2/225, F16H 1/28

(54) **Seat adjustment device**

(30) Priority: 22.11.2012 JP 2012256064
(71) Applicant: Delta Kogyo Co., Ltd., Aki-gun, Hiroshima (JP)
(72) Inventor: Oki, Yasukazu, Hiroshima (JP)
(74) Representative: Rupprecht, Kay

(57) **Abstract**

Provided is a seat adjustment device which is capable of suppressing wobbling of first and second plates and a planetary gear. The seat adjustment device (10) comprises: a first plate (1) provided with a first gear section (12); a second plate (2) provided with a second gear section (22); three planetary gears (3) each meshed with the first gear section (12) and the second gear section (22); a planetary gear holding member (5) holding the planetary gears (3) movably in a radial direction of the first and second gear sections (12, 22); a guide member (6) for guiding the planetary gears radially outwardly; and a locking member (7) for lockingly coupling together the planetary gear holding member (5) and the guide member (6), wherein the guide member (6) is configured, when it is rotated in a specific direction with respect to the planetary gear holding member (5), to guide the planetary gears (3) radially outwardly.

## Description

### TECHNICAL FIELD

The present invention relates to a seat adjustment device for use in a seat such as an automobile seat.

### BACKGROUND ART

As a reclining device used in a seat such as an automobile seat to allow a seat back to be tilted with respect to a seat cushion, there has been known one type which comprises a first plate fixed to the seat back, a second plate fixed to the seat cushion and rotatable with respect to the first plate, and a plurality of planetary gears. In this type of device, each of the first and second plates is provided with a gear section having a plurality of internal teeth. Each of the planetary gears has a plurality of external teeth, and is disposed radially inward of the gear sections of the first and second plates while allowing the external teeth to be meshed with the internal teeth of the gear sections. When each of the planetary gears is rotated on its own axis, the second plate is relatively rotated with respect to the first plate. Therefore, the seat back is tilted with respect to the seat cushion.

In this type of device, a backlash is likely to occur between respective ones of the internal teeth of the gear sections of the first and second plates and the external teeth of the planetary gears. This backlash causes wobbling of the first and second plates. This leads to wobbling of the seat back with respect to the seat cushion.

JP-U 05-001335A discloses a device in which a spring is disposed in contact relation with respective ones of a plurality of planetary gears in order to prevent such wobbling. In this device, the spring directly biases the planetary gears radially outwardly to allow external teeth of the planetary gears to be pressed against internal teeth of respective gear sections of two plates.

### [TECHNICAL PROBLEM]

In the device disclosed in JP-U 05-001335A, when a radial force is applied to the planetary gear along with its rotation, the spring is elastically deformed. This causes wobbling between the internal teeth of the plates and the external teeth of the planetary gears.

It is an object of the present invention to provide a seat adjustment device capable of more reliably suppressing wobbling between internal teeth of gear sections of first and second plates and external teeth of a plurality of planetary gears.

### [SOLUTION TO THE TECHNICAL PROBLEM]

In order to solve the above problem, the present invention provides a seat adjustment device which comprises: a first plate provided with a first gear section having a plurality of internal teeth; a second plate provided with a second gear section and rotatable with respect to the first plate, wherein the second gear section has a plurality of internal teeth and is disposed in concentric relation to the first gear section; a plurality of planetary gears arranged radially inward of the first and second gear sections in side-by-side relation to each other in a circumferential direction of the first and second gear sections, wherein each of the planetary gears has a plurality of external teeth meshable with the internal teeth of the first gear section and the internal teeth of the second gear section; a planetary gear holding member holding the planetary gears movably in a radial direction of the first and second gear sections; a guide member rotatable with respect to the planetary gear holding member; and a locking member capable of lockingly coupling together the planetary gear holding member and the guide member, wherein the guide member has a gear guide section for, when the guide member is rotated in a specific direction with respect to the planetary gear holding member, guiding the planetary gears held by the planetary gear holding member, outwardly in the radial direction of the first and second gear sections, and the locking member is configured, in a state in which the planetary gears are guided outwardly in the radial direction of the first and second gear sections by the guide member, to lockingly couple together the guide member and the planetary gear holding member holding the planetary gears in the state.

In the device of the present invention, the planetary gears can be easily guided outwardly in the radial direction of the first and second gear sections by rotating the guide member. Further, the planetary gears can be held at the radially outwardly moved position by the locking member. This makes it possible to more reliably suppress wobbling between the internal teeth of the first and second gear sections of the first and second plates, and the external teeth of each of the planetary gears.

### BRIEF DESCRIPTION OF THE DRAWINGS

FIG. 1 is a side view of an automobile seat equipped with a reclining device as a seat adjustment device according to a first embodiment of the present invention.
FIG. 2 is a fragmentary perspective view of the reclining device in FIG. 1.
FIG. 3 is an exploded perspective view of the reclining device in FIG. 1.
FIG. 4 is a front view of the reclining device in FIG. 1.
FIG. 5 is a sectional view taken along the line V-V in FIG. 4.
FIG. 6 is a sectional view taken along the line VI-VI in FIG. 5.
FIG. 7 is a sectional view taken along the line VII-VII in FIG. 5.
FIG. 8 is a sectional view taken along the line VIII-VIII in FIG. 5.
FIG. 9 is a sectional view taken along the line IX-IX in FIG. 5.
FIG. 10 is an explanatory front view of a state in which a planetary gear shaft is located on the side of a small-radius region of a gear guide section.
FIG. 11 is an explanatory front view of a process of operationally rotating the planetary gear holding member from the state in FIG. 10 to guide the planetary gear shaft radially outwardly.

### DESCRIPTION OF EMBODIMENTS

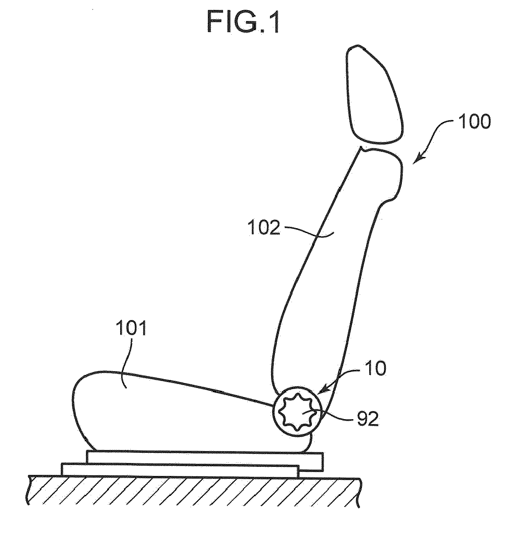

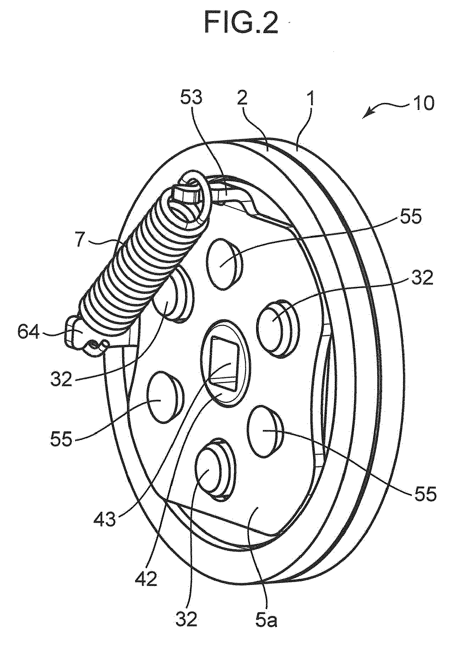

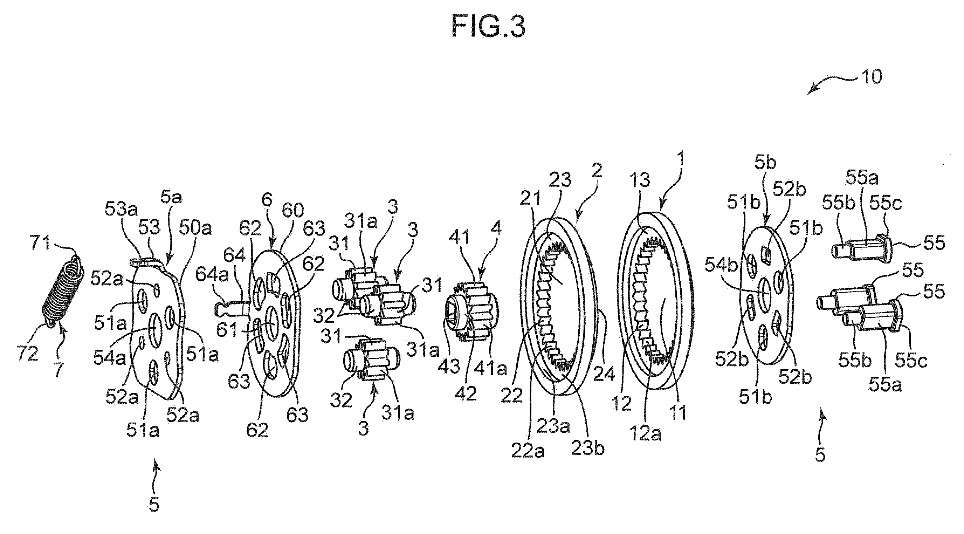

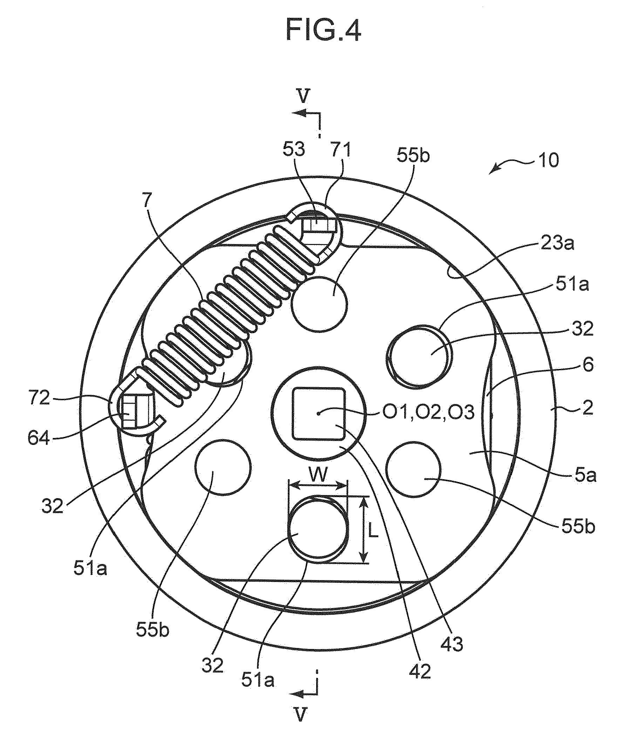

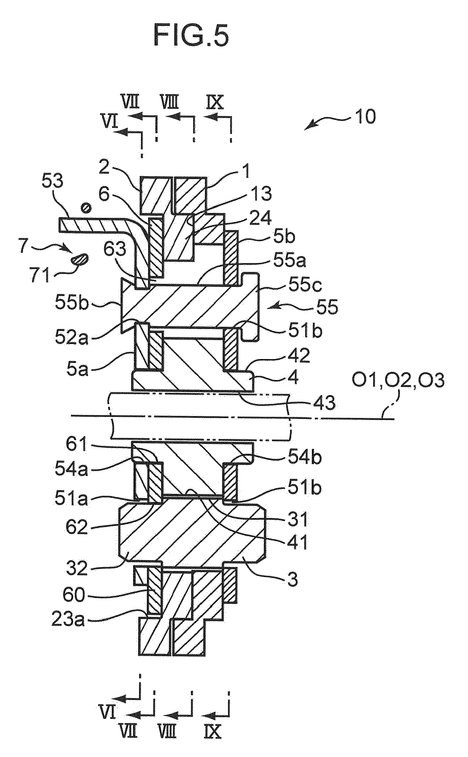

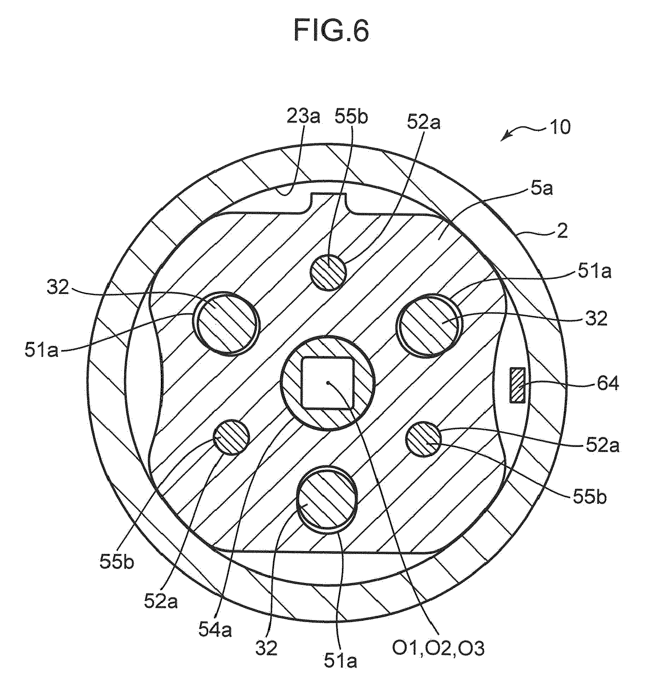

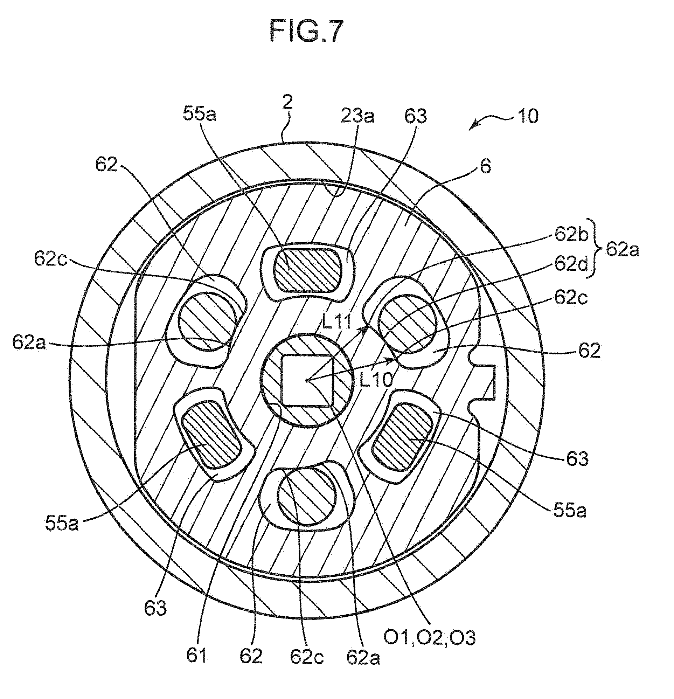

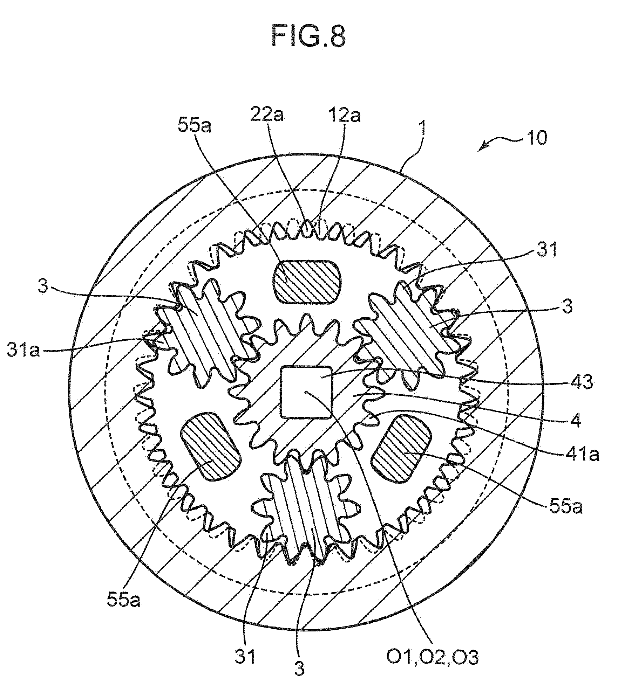

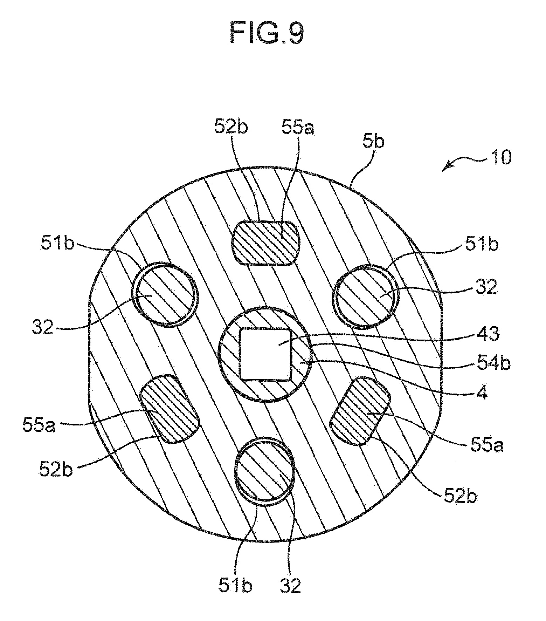

With reference to the drawings, an embodiment of the present invention will now be described. This embodiment will be described based on an example in which a seat adjustment device of the present invention is used in an automobile seat 100, and implemented as an automobile reclining device 10. FIG. 1 is a side view of the automobile seat 100. FIG. 2 is a fragmentary perspective view of the reclining device 10 in FIG. 1. FIG. 3 is an exploded perspective view of the reclining device 10 in FIG. 1. FIG. 4 is a front view of the reclining device 10 in FIG. 1. FIG. 5 is a sectional view taken along the line V-V in FIG. 4. FIG. 6 is a sectional view taken along the line VI-VI in FIG. 5. FIG. 7 is a sectional view taken along the line VII-VII in FIG. 5. FIG. 8 is a sectional view taken along the line VIII-VIII in FIG. 5. FIG. 9 is a sectional view taken along the line IX-IX in FIG. 5.

As illustrated in FIGS. 2 and 3, the reclining device 10 comprises a first plate 1, a second plate 2, a plurality of (in this embodiment, three) planetary gears 3, a sun gear 4, a planetary gear holding member 5, a guide member 6, and a locking member 7.

The first plate 1 is a circular plate-shaped member having a hole formed in a central region thereof to penetrate therethrough in a front-rear direction. That is, the first plate 1 is a ring-shaped member having a first-plate hole 11 formed in a central region thereof. The first plate 1 is formed with a first gear section 12 having a plurality of first internal teeth 12a and defining the central region. Specifically, an inner peripheral surface of the first plate 1 defining the first-plate hole 11 has a plurality of first internal teeth 12a provided over the entire circumference thereof to protrude radially inwardly. Respective central axes of the first gear section 12 and the first plate 1 are coincident with each other.

The first plate 1 has a receiving concave portion 13 provided in a radially inward region of a front surface thereof (a surface thereof on the side of the second plate 2 in FIG. 3) over the entire circumference of the front surface in such a manner as to be concaved rearwardly.

The second plate 2 is a circular plate-shaped member having a hole formed in a central region thereof to penetrate therethrough in the front-rear direction. That is, the second plate is a ring-shaped member having a second-plate hole 21 formed in a central region thereof. The second plate 2 is formed with a second gear section 22 having a plurality of second internal teeth 22a and defining the central region. Specifically, an inner peripheral surface of the second plate 2 defining the second-plate hole 21 has a plurality of second internal teeth 22a provided over the entire circumference thereof to protrude radially inwardly. Respective central axes of the second gear section 22 and the second plate 2 are coincident with each other. The number of the second internal teeth 22a is different from the number of the first internal teeth 12a.

The second plate 2 has a concave portion 23 provided in a radially inward region of a front surface thereof (a surface thereof on the side of the planetary gears 3 in FIG. 3) over the entire circumference of the front surface in such a manner as to be concaved rearwardly. Specifically, the second plate 2 has a stepped portion provided in a front surface thereof over its entire circumference, wherein a radially inward region of the frontsurface of the second plate 2 is located offset rearwardly with respect to a radially outward region thereof. Then, the radially inward region 23b of the frontsurface of the second plate 2, and an inner peripheral wall 23a extending frontwardly from an outer peripheral edge of the radially inward region 23b, make up the concave portion 23. The inner peripheral wall 23a of the concave portion 23 is a cylindrical surface concentric with a central axis of the second-plate hole 21 and a central axis of the second gear section 22.

The second plate 2 also has a fitting portion 24 provided in a rear surface of the second plate 2 over its entire circumference to protrude rearwardly. The fitting portion 24 is fittable into the receiving concave portion 13 of the first plate 1.

The first plate 1 and the second plate 2 each configured as above are arranged as follows.

As illustrated in FIG. 5, through an operation of fitting the fitting portion 24 of the second plate 2 into the receiving concave portion 13 of the first plate 1, the first plate 1 and the second plate 2 are disposed in such a manner that respective central axes of the first and second plates 1, 2 become coincident with each other, and, eventually, respective central axes of the first and second gear sections 12, 22 become coincident with each other, to form a common central axis O1. In this state, the fitting portion 24 is rotatable about the central axis O1 within the receiving concave portion 13, and, therefore, the second plate 2 is rotatable about the central axis O1 with respect to the first plate 1.

In the following description, the central axis O1 will be referred to occasionally as "rotational axis O1". Further, a radial direction of a circle having a center on the rotational axis O1, i.e., a radial direction of the first and second gear sections 12, 22, will be referred to simply as "radial direction" or "radially", and a circumferential direction of the circle, i.e., a circumferential direction of the first and second gear sections 12, 22 will be referred to simply as "circumferential direction" or "circumferentially". Furthermore, a direction of the rotational axis O1 will be referred to as "front-rear direction", wherein, in FIG. 3, a side toward the first plate 1 with respect to the second plate 2, and a side toward the second plate 2 with respect to the first plate 1, will be referred to respectively as "rear" or "rear side" and "front" or "front side".

The sun gear 4 comprises a sun gear shaft 42 and a gear portion 41. The sun gear shaft 42 is an approximately circular columnar-shaped member having a shaft insertion hole 43 formed thereinside to penetrate therethrough in an axial direction thereof. The shaft insertion hole 43 has a square cross-sectional shape. The gear portion 41 is provided on an approximately central region of the sun gear shaft 42 in its axial direction. The gear portion 41 protrudes from an outer peripheral surface of the sun gear shaft 42 over its entire circumference, outwardly in a radial direction of the sun gear shaft 42. The gear portion 41 has a plurality of external teeth 41a formed on an outer peripheral surface thereof over its entire circumference to protrude outwardly in the radial direction of the sun gear shaft 42. Respective central axes of the sun gear shaft 42 and the gear portion 41 are coincident with each other.

Each of the planetary gears 3 has the same configuration. Specifically, each of the planetary gears 3 comprises a planetary gear shaft 32 and a gear portion 31. The planetary gear shaft 32 is a circular columnar-shaped member. The gear portion 31 is provided on an approximately central region of the planetary gear shaft 32 in its axial direction. The gear portion 31 protrudes from an outer peripheral surface of the planetary gear shaft 32 over its entire circumference, outwardly in a radial direction of the planetary gear shaft 32. The gear portion 31 has a plurality of external teeth 31a formed on an outer peripheral surface thereof over its entire circumference to protrude outwardly in the radial direction of the planetary gear shaft 32. Respective central axes of the planetary gear shaft 32 and the gear portion 31 are coincident with each other. The shape of the planetary gear shaft 32 is not limited to a circular columnar shape. As used therein, the term "circular columnar shape" includes not only a fully-circular columnar shape but also a shape approximated by a circular columnar shape.

The sun gear 4 and the planetary gears 3 are arranged as follows.

As illustrated in FIG. 5, the sun gear 4 is disposed radially inward of the first and second gear sections 12, 22 at a position where the concentric axis of the sun gear shaft 42 and the gear section 41 is coincident with the rotational axis O1.

As illustrated in FIGS. 5 and 8, each of the planetary gears 3 is disposed radially inward of the first and second gear sections 12, 22 and radially outward of the gear portion 41 of the sun gear 4. In this state, the external teeth 31a of the gear portion 31 of each of the planetary gears 3 are meshed with the external teeth 41a of the gear portion 41 of the sun gear 4. The external teeth 31a of the gear portion 31 of each of the planetary gears 3 are also meshed with the internal teeth 12a of the first gear section 12 and the second internal teeth 22a of the second gear section 22. The planetary gears 3 are arranged at even intervals, in a circumferential direction of a circle having a center on the rotational axis O1, i.e., in a circumferential direction of the first and second gear sections 12, 22.

The first and second plates 1, 2 with the sun gear 4 and the planetary gears 3 disposed inward thereof are attached to the seat 100, individually. Specifically, the first plate 1 is fixedly attached to a seat back 102 (see FIG. 1) of the seat 100 directly or through a bracket. The second plate 2 is fixedly attached to a seat cushion 101 of the seat 100 directly or through a bracket.

A given operation shaft is non-rotatably inserted into the shaft insertion hole 43 of the sun gear 4. The operation shaft has a manual operation member 92 (illustrated in FIG. 1) engaged with one end thereof in a non-rotatable manner. Thus, when the manual operation member 92 is manually rotated, the sun gear 4 is rotated about the rotation axis O1. Along with this rotation, each of the three planetary gears 3 meshed with the sun gear 4 is rotated around the sun gear 4 while being meshed with the first and second gear sections 12, 22. As mentioned above, the first gear section 12 is different from the second gear section 22 in terms of the number of teeth. Thus, when the planetary gears 3 are rotated around the sun gear 4, the first gear section 12 (first plate 1) is rotated about the rotational axis O1 with respect to the second gear section 22 (second plate 2). Along with this rotation, the seat back 102 is tilted with respect to the seat cushion 101.

In the above embodiment, the operation shaft inserted into the shaft insertion hole 43 of the sun gear 4 is configured to be rotated by a user's manual operation of the manual operation member 92. Alternatively, the operation shaft may be configured to be rotationally operated by a motor.

A holding structure for the planetary gears 3 will be described below.

The planetary gears 3 are held by the planetary gear holding member 5. As illustrated in FIGS. 3 and 5, the planetary gear holding member 5 comprises: a first holding member 5a and a second holding member 5b for restricting the sun gear 4 and the planetary gears 3 from dropping out in the front-rear direction; and a plurality of (in this embodiment, three) coupling members 55 for relatively non-rotatably coupling the first holding member 5a and the second holding member 5b together. The first holding member 5a is disposed frontward of the gear portion 31 of each of the planetary gears 3 and the gear portion 41 of the sun gear 4. The second holding member 5b is disposed rearward of the gear portions 31, 41.

The first holding member 5a has an approximately square plate-shaped holding member body 50a, and a first retainer piece 53.

The holding member body 50a is formed with four holes penetrating therethrough in the front-rear direction, and installed within the concave portion 23 of the second plate 2, in a posture where it extends in a direction perpendicular to the rotational axis O1, while holding a front portion of the sun gear shaft 42 of the sun gear 4 and three front portions of the planetary gear shafts 32 of the planetary gears 3 each inserted into a respective one of the four holes. In this installation state, the holding member body 50a prevents the sun gear 4 and the planetary gear 3 from dropping out frontwardly.

Specifically, as illustrated in FIG. 6, the holding member body 50a has a sun gear shaft holding hole 54a provided in a central region thereof to allow the front portion of the sun gear shaft 42 to be inserted thereinto. The sun gear shaft holding hole 54a is a circular hole having a center on a center O2 of the first holding member 5a, and an inner diameter thereof is approximately equal to an outer diameter of the sun gear shaft 42, and less than an outer diameter of the gear portion 41 of the sun gear 4. Thus, in a state in which the holding member body 50a is installed within the concave portion 23 of the second plate 2, and the front portion of the sun gear shaft 42 is inserted into the sun gear shaft holding hole 54a, the holding member body 50a restricts the sun gear 4 from dropping out frontwardly. The sun gear shaft 42 is fittingly inserted into the sun gear shaft holding hole 54a in a rotatable manner. In the state in which the holding member body 50a is installed within the concave portion 23 of the second plate 2, the center O2 of the first holding member 5a and the sun gear shaft holding hole 54a is coincident with the rotational axis O1.

The holding member body 50a also has three planetary gear shaft holding holes 51a each allowing the front portion of a respective one of the planetary gear shafts 32 to be inserted thereinto. Each of the planetary gear shaft holding holes 51a is provided at a position corresponding to a respective one of the planetary gear shafts 32 in the state in which the holding member body 50a is installed within the concave portion 23 of the second plate 2. That is, the planetary gear shaft holding holes 51a are arranged at even intervals on a circle having a center on the rotational axis O1.

Each of the planetary gear shaft holding holes 51a has an inner diameter is equal to or greater than an outer diameter of the planetary gear shaft 32 of the planetary gear 3, and less than an outer diameter of the gear portion 31 of the planetary gear 3. Thus, in a state in which the holding member body 50a is installed within the concave portion 23 of the second plate 2, and each of the front portions of the planetary gear shafts 32 is inserted into a respective one of the planetary gear shaft holding holes 51a, the holding member body 50a restricts the planetary gears 3 from dropping out frontwardly.

Each of the planetary gear shaft holding holes 51a is an elongate hole. As illustrated in FIGS. 4 and 6, each of the planetary gear shaft holding holes 51a is set such that a radial hole length L (hole length L in the radial direction) thereof is greater than the outer diameter dimension of the planetary gear shaft 32, and a circumferential hole length W (hole length W in the circumferential direction) thereof is approximately equal to the outer diameter of the planetary gear shaft 32 and less than that the radial hole length L. Therefore, in the state in which the holding member body 50a is installed within the concave portion 23 of the second plate 2, and each of the planetary gear shafts 32 is inserted into a respective one of the planetary gear shaft holding holes 51a, each of the planetary gear shafts 32 can be rotated about its central axis and moved radially (in a radial direction of a circle having a center on the rotational axis O1), but cannot be moved circumferentially (in a circumferential direction of a circle having a center on the rotational axis O1).

The holding member body 50a further has three coupling member holding holes 52a each penetrating therethrough in the front-rear direction. Each of the coupling member holding holes 52a is a circular hole, and an aftermentioned crimpable portion 55b of each of the coupling members 55 is inserted thereinto. Each of the three coupling member holding holes 52a is provided between circumferentially adjacent ones of the planetary gear shaft holding holes 51a.

The first retainer piece 53 is a plate-shaped member. As illustrated in FIGS. 3 and 5, in the state in which the holding member body 50a is installed within the concave portion 23 of the second plate 2, the first retainer piece 53 protrudes frontwardly from an outer peripheral edge of the holding member body 50a. The first retainer piece 53 is provided in a central region of one side of the holding member body 50a as an approximately square plate-shaped member. In this embodiment, the first retainer piece 53 and the holding member body 50a are composed of a single plate-shaped member, and formed by bending a part of the plate-shaped member at an approximately right angle with respect to the holding member body 50a.

The first retainer piece 53 has a catching portion 53a firmed at a distal end thereof. Specifically, in the state in which the holding member body 50a is installed within the concave portion 23 of the second plate 2, circumferentially opposite side surfaces of the first retainer piece 53 are partially depressed inwardly, and a portion of the first retainer piece 53 having the depressions makes up the catching portion 53a.

The second holding member 5b has approximately the same configuration as that of the holding member body 50a of the first holding member 5a.

Specifically, the second holding member 5b is an approximately square plate-shaped member. The second holding member 5b has a sun gear shaft holding hole 54b provided in a central region thereof to allow the rear portion of the sun gear shaft 42 to be inserted thereinto, whereby the sun gear shaft 42 is fittingly inserted thereinto in a rotatable manner. The sun gear shaft holding hole 54b has the same configuration as that of the sun gear shaft holding hole 54a of the first holding member 5a. That is, the sun gear shaft holding hole 54b is a circular hole having a center on a center O3 of the second holding member 5b, and an inner diameter thereof is less than the outer diameter of the gear portion 41 of the sun gear 4, and approximately equal to the outer diameter of the sun gear shaft 42. Thus, in a state in which the sun gear shaft 42 is inserted into the sun gear shaft holding hole 54b, and the second holding member 5b is installed in rear of the first plate 1, the second holding member 5b restricts the sun gear 4 from dropping out rearwardly. Further, in this state the center O3 of the second holding member 5b is coincident with a central axis of the sun gear shaft 42 and the rotational axis O1.

The second holding member 5b also has three planetary gear shaft holding holes 51b each allowing the rear portion of a respective one of the planetary gear shafts 32 to be inserted thereinto. Each of the planetary gear shaft holding holes 51b has the same configuration as that of each of the planetary gear shaft holding holes 51a of the first holding member 5a. That is, the planetary gear shaft holding holes 51b are arranged at even intervals on a circle having a center on the rotational axis O1, and each of the planetary gear shaft holding holes 51b has an inner diameter less than the outer diameter of the gear portion 31 of the planetary gear 3. Each of the planetary gear shaft holding holes 51b is an elongate hole, and a hole diameter thereof is set to, in a state in which each of the planetary gear shafts 32 is inserted into a respective one of the planetary gear shaft holding holes 51b, permit the planetary gear shaft 32 to be rotated about its central axis inside the planetary gear shaft holding hole 51b, without permitting the planetary gear shaft 32 to be moved circumferentially (in a circumferential direction of a circle having a center on the rotational axis O1), and permit the planetary gear shaft 32 to be moved radially (in a radial direction of a circle having a center on the rotational axis O1).

The second holding member 5b further has three coupling member holding holes 52b each penetrating therethrough in the front-rear direction. An aftermentioned shaft portion 55a of each of the coupling members 55 is penetratingly inserted into each of the coupling member holding holes 52b. The coupling member holding hole 52b has a hole shape corresponding to the shaft portion 55a. Differently from the coupling member holding holes 52a of the first holding member 5a, it is an elongate hole.

Each of the coupling members 55 has the same configuration. Each of the coupling members 55 has a shaft portion 55a extending in a given direction, a circular columnar-shaped crimpable portion 55b protruding axially outwardly from one of axially opposite ends of the shaft portion 55a, and a head 55c provided at the other end of the shaft portion 55a.

Each of the coupling member holding holes 52a of the first holding member 5a has an inner diameter approximately equal to an outer diameter of the crimpable portion 55b of the coupling member 55. On the other hand, each of the coupling member holding holes 52b of the second holding member 5b has a shape approximately identical to a cross-sectional shape of the shaft portion 55a of the coupling member 55. Thus, each of the crimpable portions 55b of the coupling members 55 is fittingly inserted into a respective one of the coupling member holding holes 52a of the first holding member 5a, and each of the shaft portions 55a of the coupling members 55 is fittingly inserted into a respective one of the coupling member holding holes 52b of the second holding member 5b. The inner diameter of each of the coupling member holding holes 52b of the second holding member 5b is less than an outer diameter of the head 55c of the coupling member 55, so that the head 55c is not insertable into the coupling member holding hole 52a.

The above components are assembled as the holding member 5 as illustrated in FIG. 5. Specifically, the sun gear shaft 42 and the planetary gear shafts 32 are inserted, respectively, into the holes of the first and second holding members 5a, 5b, in such a manner that the sun gear 4 and the planetary gears 3 are clamped between the first and second holding members 5a, 5b in the front-rear direction so as to restrict them from dropping out in the front-rear direction. Then, in a state in which the crimpable portion 55b and the shaft portion 55a of each of the coupling member 55 are inserted, respectively, into corresponding ones of the coupling member holding holes 52a, 52b of the first and second holding members 5a, 5b clamping the sun gear 4 and the planetary gears 3 therebetween, the crimpable portion 55b protruding frontwardly from each of the coupling member holding holes 52a of the first holding member 5a is subjected to crimping. The head 55c and the crimpable portion 55b restrict the first and second holding members 5a, 5b from dropping out in the front-rear direction, so that the first and second holding members 5a, 5b are coupled together in a relatively immovable manner.

As mentioned above, the circumferential hole length W of each of the planetary gear shaft holding holes 51a, 52b is approximately the same as the outer diameter dimension of each of the planetary gear shafts 32. On the other hand, the radial hole length L of each of the planetary gear shaft holding holes 51a, 52b is greater than the outer diameter dimension of each of the planetary gear shafts 32. Therefore, each of the planetary gear shafts 32 can be only radially moved within a respective one of the planetary gear shaft holding holes 51a, 52b, while being held by the first and second holding member 5a, 5b. Each of the planetary gears 3 can be radially moved relatively with respect to the first and second holding member 5a, 5b.

The guide member 6 will be described below. The guide member 6 is configured to guide each of the planetary gears 3 radially outwardly (outwardly in a radial direction of a circle having a center on the rotational axis O1), i.e., outwardly in the radial direction of the first and second gear section 12, 22.

As illustrated in FIG. 3, the guide member 6 has an approximately disc-shaped guide member body 60, and a second retainer piece 64. As illustrated in FIG. 5, the guide member body 60 is formed with seven holes penetrating therethrough in the front-rear direction, and installed within the concave portion 23 of the second plate 2, in a posture where it extends in a direction perpendicular to the rotational axis O1, while allowing the sun gear shaft 42 of the sun gear 4, the planetary gear shafts 32 of the planetary gears 3 and the coupling members 55 to be penetratingly inserted, respectively, into the seven holes. The guide member body 60 is installed between a bottom surface 23b of the concave portion 23 and the first holding member 5a. In this installation state, a center of the guide member body 60 is coincident with the rotational axis O1.

Specifically, as illustrated in FIG. 7, the guide member body 60 has: a sun gear shaft insertion hole 61 for allowing the sun gear shaft 42 to be penetratingly inserted therein; three planetary gear shaft insertion holes 62 for allowing the respective planetary gear shafts 32 to be penetratingly inserted therein; and three coupling member insertion holes 63 for allowing the shaft portion 55a of the respective coupling members 55 to be penetratingly inserted therein.

The sun gear shaft insertion hole 61 is a circular hole having a center at a center of the guide member body 60 (the rotational axis O1). The sun gear shaft insertion hole 61 has an inner diameter which is set to be approximately equal to an outer diameter of the sun gear shaft 42.

A hole length of each of the coupling member insertion holes 63 is set to be greater than an outer diameter of the shaft portion 55a of each of the coupling members 55. A hole length of each of the planetary gear shaft insertion holes 62 is set to be greater than the outer diameter of the planetary gear shaft 32. Further, the inner diameter of the sun gear shaft insertion hole 61 is approximately equal to the outer diameter of the sun gear shaft 42. Thus, when the sun gear shaft 42 is penetratingly inserted into the sun gear shaft insertion hole 61, the guide member body 60 is restricted from being moved radially, while being permitted to be rotated about the rotational axis O1, with respect to the shaft portions 55a of the coupling members 55, and the planetary gear shafts 32. In this state, the first and second holding members 5a, 5b are relatively non-rotatably with respect to the planetary gear shafts 32. Therefore, the guide member body 60 is circumferentially rotatable about the rotational axis O1 with respect to the holding member 5.

Each of the planetary gear shaft insertion holes 62 is an approximately rectangular-shaped elongate hole, a circumferential hole length thereof is greater than a radial hole length thereof.

A radially inward region of an inner peripheral surface of each of the planetary gear shaft insertion holes 62 extending circumferentially (in a circumferential direction of a circle having a center on the rotational axis O1, i.e., in the circumferential direction of the first and second gear section 12, 22) functions as a gear guide section 62a for guiding the planetary gear shaft 32 radially (in a radial direction of a circle having a center on the rotational axis O1, i.e., in the radial direction of the first and second gear section 12, 22).

As illustrated in FIG. 7, the gear guide section 62a has a shape in which a distance thereof from the rotational axis O1 gradually increases in a direction from one of circumferentially opposite ends of the gear guide section 62a to the other end. That is, assuming that one of circumferentially opposite end of the gear guide section 62a which is a region at a relatively small distance from the rotational axis O1 is defined as a small-radius region 62b, and the other end which is a region having a relatively large radius from the rotational axis O1 is defined as a large-radius region 62c, a distance L10 between the large-radius region 62c and the rotational axis O1 is greater than a distance L11 between the small-radius region 62b and the rotational axis O1. Further, a distance between the gear guide section 62a and the rotational axis O1 gradually increases in a direction from the small-radius region 62b to the large-radius region 62c.

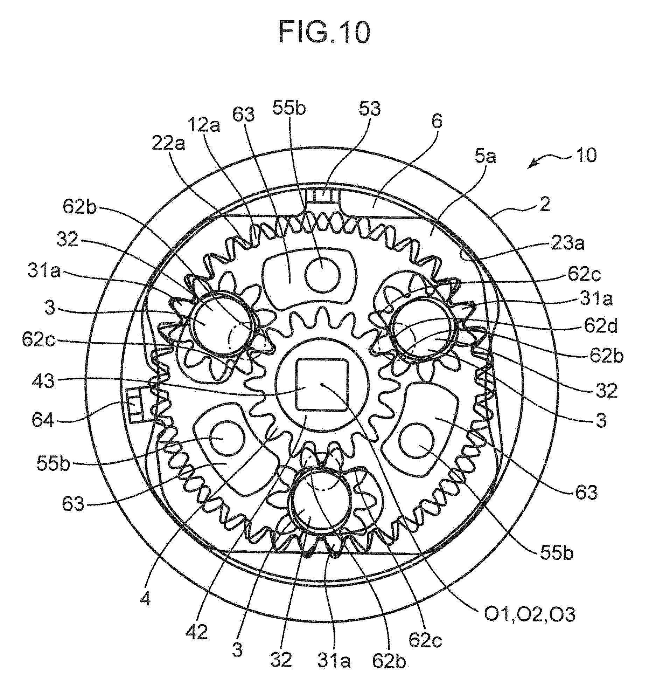

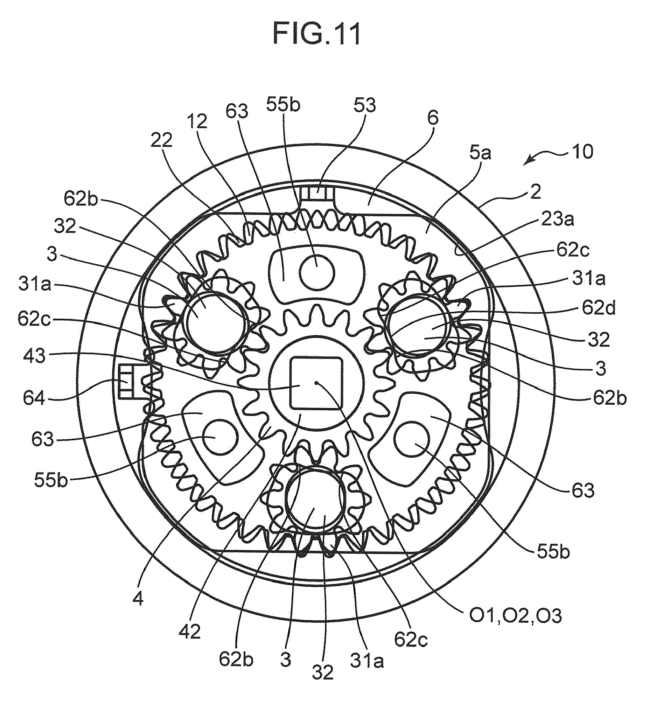

When the planetary gear shaft 32 is relatively moved circumferentially within the planetary gear shaft insertion hole 62, while being in contact with the gear guide section 62a, the gear guide section 62a can guide the planetary gear 3 radially outwardly. More specifically, when the guide member 6 is rotated about the rotational axis O1 with respect to the holding member 5, from a state in which the planetary gear shaft 32 is in contact with the small-radius region 62b of the gear guide section 62a, as illustrated in FIG. 10, in a direction from the large-radius region 62c to the small-radius region 62b (a specific direction; in FIGS. 10 and 11, a clockwise direction), and the planetary gear shaft 32 is relatively moved toward the large-radius region 62c, as illustrated in FIG. 11, the planetary gear shaft 32is pressed by the large-radius region 62c radially outwardly. So that the planetary gear 3 is moved radially outwardly.

In this way, the planetary gear 3 is guided radially outwardly by the gear guide section 62a, and the external teeth of the gear portion 31 of the planetary gear 3 is pressed against the internal teeth 12a of the first gear section 12 and the internal teeth 22a of the second gear section 22.

The second retainer piece 64 is a plate-shaped member. As illustrated in FIGS. 2 and 3, in the state in which the guide member body 60 is installed within the concave portion 23, the second retainer piece 64 protrudes frontwardly from an outer peripheral edge of the guide member body 60. In this embodiment, the second retainer piece 64 and the guide member body 60 are composed of a single plate-shaped member, and formed by bending a part of the plate-shaped member at an approximately right angle with respect to the guide member body 60.

The second retainer piece 64 has a catching portion 64a firmed at a distal end thereof. Specifically, in the state in which the guide member body 60 is installed within the concave portion 23, circumferentially opposite side surfaces of the second retainer piece 64 are partially depressed inwardly, and a portion of the second retainer piece 64 having the depressions makes up the catching portion 64a.

The locking member 7 will be described below. The locking member 7 is configured, in a state in which the planetary gears 3 are guided radially outwardly by the respective gear guide sections 62a of the guide member 6, to lockingly couple together the guide member 6 and the first holding member 5a of the planetary gear holding member 5 holding the planetary gears 3.

In this embodiment, the locking member 7 is a coil spring. As illustrated in FIG. 3, the coil spring 7 has two hook-like pieces 71, 72 provided, respectively, at axially opposite ends thereof.

In a state in which the first retainer piece 53 and the second retainer piece 64 are spaced apart from each other at about 90 degrees, as illustrated in FIG. 11, the hook-like pieces 71, 72 of the coil spring 7 are hooked, respectively, to the catching portion 53a of the first retainer piece 53 of the first holding member 5a, and the catching portion 64a of the second retainer piece 64 of the guide member 6. In this manner, the first holding member 5a and the guide member 6 are coupled together.

The coil spring 7 has a natural length in the state in which the planetary gears 3 are guided radially outwardly by the respective gear guide sections 62a of the guide member 6. Thus, based on an elastic reaction force, the coil spring 7 can maintain the planetary gears 3 in the radially outwardly guided state, by restricting a situation where the guide member 6 is rotated about the rotational axis O1 with respect to the holding member 5 in a direction from the small-radius region 62b to the large-radius region 62c (a direction opposite to the specific direction; in FIGS. 10 and 11, a counterclockwise direction) and thereby the planetary gears 3 are moved radially inwardly.

As above, in the reclining device 10 according to the above embodiment, the planetary gears 3 can be easily guided radially outwardly by rotating the guide member 6 with respect to the holding member 5. Further, the coil spring 7 lockingly couples together the guide member 6 and the first holding member 5a holding the planetary gears 3 moved radially outwardly, to maintain the planetary gears 3 in the radially outwardly moved state. Thus, it becomes possible to suppress wobbling of the planetary gears 3 and the first and second gear sections 12, 22, due to a backlash therebetween. This prevents wobbling of the seat back 102 with respect to the seat cushion 101. Particularly, in this device, as long as the guide member 6 is not rotated in the direction from the small-radius region 62b to the large-radius region 62c (the direction opposite to the specific direction; in FIGS. 10 and 11, the counterclockwise direction), the planetary gears 3 will be positionally held. That is, even when a radially inward force is applied to the planetary gears 3 along with their revolution, the holding member 5 can positionally hold the planetary gears 3 more reliably. This prevents the above wobbling more reliably.

It is to be noted that the seat adjustment device of the present invention is not limited to a seat reclining device. For example, the present invention may be applied to a lifter for raising and lowering a seat such as an automobile seat.

Although the above embodiment has been described based on an example where the coil spring 7 lockingly couples together the first holding member 5a and the guide member 6, the locking member 7 for lockingly coupling them is not limited thereto. For example, guide member the first holding member 5a and the guide member 6 may be lockingly coupled together by means of a bolt.

However, in the above configuration where the coil spring 7 is used as the locking member 7 to apply a biasing force to the first holding member 5a and the guide member 6, it becomes possible to allow the guide member 6 to become less likely to be rotated in the direction opposite to the specific direction. In addition, even when the guide member is rotated in the direction opposite to the specific direction, against the biasing force of the biasing member (coil spring 7?), due to an external load, the guide member can be returned to its original position upon removal of the external load. This suppresses wobbling of the planetary gears and the first and second gear sections due to a backlash therebetween, in a more reliable manner. Further, the first holding member 5a and the guide member 6 can be coupled by the coil spring 7, through a simple method of lockingly engaging the opposite ends of the coil spring 7 with the first holding member 5a and the guide member 6. It is to be understood that, in place of the coil spring 7, any other type of spring or an elastic member may be used.

An element for applying a biasing force is not limited to a spring or elastic member. For example, a magnetic member may be used.

Although the above embodiment has been described based on an example where the guide member 6 is rotated about the central axis O1 of the first gear section, a rotational axis of the guide member 6 may be not fully coincident with the central axis O1. Although the above embodiment has been described based on an example where the gear guide section 62a is composed of the inner peripheral surface of the planetary gear shaft insertion hole 62, the gear guide section may be any other configuration capable of guiding the planetary gears 3 radially outwardly according to a rotation of the guide member 6 with respect to the planetary gear holding member 5 in the specific direction. For example, instead of providing the planetary gear shaft insertion holes 62, a wall may be provided on a surface of the guide member to extend circumferentially in the same manner as that of the inner peripheral surface of the planetary gear shaft insertion hole 62.

As mentioned above, the present invention provides a seat adjustment device which comprises: a first plate provided with a first gear section having a plurality of internal teeth; a second plate provided with a second gear section and rotatable with respect to the first plate, wherein the second gear section has a plurality of internal teeth and is disposed in concentric relation to the first gear section; a plurality of planetary gears arranged radially inward of the first and second gear sections in side-by-side relation to each other in a circumferential direction of the first and second gear sections, wherein each of the planetary gears has a plurality of external teeth meshable with the internal teeth of the first gear section and the internal teeth of the second gear section; a planetary gear holding member holding the planetary gears movably in a radial direction of the first and second gear sections; a guide member rotatable with respect to the planetary gear holding member; and a locking member capable of lockingly coupling together the planetary gear holding member and the guide member, wherein the guide member has a gear guide section for, when the guide member is rotated in a specific direction with respect to the planetary gear holding member, guiding the planetary gears held by the planetary gear holding member, outwardly in the radial direction of the first and second gear sections, and the locking member is configured, in a state in which the planetary gears are guided outwardly in the radial direction of the first and second gear sections by the guide member, to lockingly couple together the guide member and the planetary gear holding member holding the planetary gears in the state.

In the device of the present invention, the planetary gears can be moved outwardly in the radial direction of the first and second gear sections to allow the external teeth of the planetary gears to be moved toward the internal teeth of the first and second gear sections, through a simple process of rotating the guide member with respect to the planetary gear holding member in the specific direction. This suppresses wobbling of the planetary gears and the first and second gear sections due to a backlash therebetween.

The planetary gear holding member and the guide member are lockingly couples together in the state in which the planetary gears are moved radially outwardly. Thus, the planetary gears can be maintained in the radially outwardly moved state, in a more reliable manner. This suppresses the above wobbling in a more reliable manner.

Preferably, in the seat adjustment device of the present invention, each of the planetary gears has a planetary gear shaft extending parallel to a central axis of the first gear section, and the planetary gear holding member has a planetary gear holding hole into which the planetary gear shaft is inserted, wherein the planetary gear holding hole has a shape for allowing the planetary gear shaft to be moved within the planetary gear holding hole in the radial direction of the first and second gear sections, and wherein the gear guide section is configured to guide the planetary gear shaft within the planetary gear holding hole, outwardly in the radial direction of the first and second gear sections.

More preferably, the planetary gear shaft has a circular columnar shape extending parallel to the central axis of the first gear section, and the planetary gear holding hole is an elongate hole extending in the radial direction of the first and second gear sections, and wherein a hole length of the planetary gear holding hole in the radial direction of the first and second gear sections is set to be greater than an outer diameter of the planetary gear shaft, and a hole length of the planetary gear holding hole in the circumferential direction of the first and second gear sections is set to be approximately equal to the outer diameter of the planetary gear shaft.

According to this feature, the planetary gear shaft is held by the planetary gear holding member, in such a manner as to be movable in the radial direction and immovable in the circumferential direction. This suppresses wobbling of the planetary gear shaft in the circumferential direction.

In the above seat adjustment device, the guide member may be configured to be rotated around the central axis of the first gear section, and the gear guide section may be formed to extend in the circumferential direction of the first and second gear sections, wherein a distance between the gear guide section and a rotational center of the guide member gradually increases in a direction from one end to the other end of the gear guide section along the circumferential direction of the first and second gear sections.

According to this feature, each of the planetary gears can be easily moved radially outwardly by moving the planetary gear shaft along the gear guide section.

Preferably, in the seat adjustment device of the present invention the locking member is configured, when the guide member is rotated in a direction opposite to the specific direction, with respect to the planetary gear holding member, to apply, to the guide member, a biasing force toward the specific direction.

According to this feature, it becomes possible to allow the guide member to become less likely to be rotated in a direction opposite to the specific direction. In addition, even when the guide member is rotated in the direction opposite to the specific direction, against the biasing force of the locking member, due to an external load, the guide member can be returned to its original position upon removal of the external load. Thus, it becomes possible to more reliably maintain each of the planetary gears at the radially outward position. This suppresses wobbling of the planetary gears and the first and second gear sections due to a backlash therebetween, in a more reliable manner.

More preferably, the locking member is a spring member, wherein one end of the locking member in a direction of a spring axis thereof is lockingly engaged with the planetary gear holding member, and the other end of the locking member is lockingly engaged with the guide member.

According to this feature, the planetary gear holding member and the guide member can be easily coupled together by lockingly engaging the locking member with the planetary gear holding member and the guide member.

## Claims

1. A seat adjustment device (10) comprising:
a first plate (1) provided with a first gear section (12) having a plurality of internal teeth (12a);
a second plate (2) provided with a second gear section (22) and rotatable with respect to the first plate (1), the second gear section (22) having a plurality of internal teeth (22a) and disposed in concentric relation to the first gear section (12);
a plurality of planetary gears (3) arranged radially inward of the first and second gear sections (12, 22) in side-by-side relation to each other in a circumferential direction of the first and second gear sections (12, 22), each of the planetary gears (3) having a plurality of external teeth (31a) meshable with the internal teeth (12a) of the first gear section (12) and the internal teeth (22a) of the second gear section (22);
a planetary gear holding member (5) holding the planetary gears (3) movably in a radial direction of the first and second gear sections (12, 22);
a guide member (6) rotatable with respect to the planetary gear holding member (5),
a locking member (7) capable of lockingly coupling together the planetary gear holding member (5) and the guide member (6),
wherein
the guide member (6) has a gear guide section (62a) for, when the guide member (6) is rotated in a specific direction with respect to the planetary gear holding member (5), guiding the planetary gears (3) held by the planetary gear holding member (5), outwardly in the radial direction of the first and second gear sections (12, 22), and
the locking member (7) is configured, in a state in which the planetary gears (3) are guided outwardly in the radial direction of the first and second gear sections (12, 22) by the guide member (6), to lockingly couple together the guide member (6) and the planetary gear holding member (5) holding the planetary gears (3) in the state.

2. The seat adjustment device as defined in claim 1, wherein:
each of the planetary gears (3) has a planetary gear shaft (32) extending parallel to a central axis (O1) of the first gear section (12);
the planetary gear holding member (5) has a planetary gear holding hole (51a, 51b) into which the planetary gear shaft (32) is inserted, the planetary gear holding hole (51a, 51b) having a shape for allowing the planetary gear shaft (32) to be moved within the planetary gear holding hole (51a, 51b) in the radial direction of the first and second gear sections (12, 22); and
the gear guide section (62a) is configured to guide the planetary gear shaft (32) within the planetary gear holding hole (51a, 51b), outwardly in the radial direction of the first and second gear sections (12, 22).

3. The seat adjustment device as defined in claim 2, wherein
the planetary gear shaft (32) has a circular columnar shape extending parallel to the central axis (O1) of the first gear section (12), and
the planetary gear holding hole (51a, 51b) is an elongate hole extending in the radial direction of the first and second gear sections (12, 22),
and wherein
a hole length of the planetary gear holding hole (51a, 51b) in the radial direction of the first and second gear sections (12, 22) is set to be greater than an outer diameter of the planetary gear shaft (32), and
a hole length of the planetary gear holding hole (51a, 51b) in the circumferential direction of the first and second gear sections (12, 22) is set to be approximately equal to the outer diameter of the planetary gear shaft (32).

4. The seat adjustment device as defined in claim 2 or 3, wherein
the guide member (6) is configured to be rotated around the central axis (O1) of the first gear section (12), and
the gear guide section (62a) is formed to extend in the circumferential direction of the first and second gear sections (12, 22), wherein a distance between the gear guide section (62a) and a rotational center (O1) of the guide member (6) gradually increases in a direction from one end to the other end of the gear guide section (62a) along the circumferential direction of the first and second gear sections (12, 22).

5. The seat adjustment device as defined in any one of claims 1 to 4, wherein the locking member (7) is configured, when the guide member (6) is rotated in a direction opposite to the specific direction, with respect to the planetary gear holding member (5), to apply, to the guide member (6), a biasing force toward the specific direction.

6. The seat adjustment device as defined in claim 5, wherein the locking member (7) is a spring member, and wherein one end of the locking member (7) in a direction of a spring axis thereof is lockingly engaged with the planetary gear holding member (5), and the other end of the locking member (7) is lockingly engaged with the guide member (6).
